# EUROPÄISCHE PATENTSCHRIFT

(11) **EP 1 897 754 B1**
(45) Veröffentlichungstag und Bekanntmachung des Hinweises auf die Patenterteilung: **17.02.2010**
(21) Anmeldenummer: 07017269.7
(22) Anmeldetag: 10.05.2006
(51) Int. Cl.: B60R 5/04

(54) **Stauvorrichtung für einen Kofferraum eines Kraftfahrzeuges**
Stowage device for the luggage compartment of a motor vehicle
Dispositif de rangement pour le coffre d'un véhicule automobile

(30) Priorität: 01.06.2005 DE 102005026670
(43) Veröffentlichungstag der Anmeldung: 12.03.2008
(62) Teilanmeldung aus: 06009614.6
(73) Patentinhaber: BOS GmbH & Co. KG, 73760 Ostfildern (DE)
(72) Erfinder: Haspel, Klaus, 72108 Rottenburg (DE); Wokrinek, Michael, 84079 Bruckberg (DE)
(74) Vertreter: Patentanwälte Ruff, Wilhelm, Beier, Dauster & Partner

(56) Entgegenhaltungen:
- EP-A- 1 642 777
- WO-A-2004/065197
- US-A- 5 046 913
- US-A- 5 855 310
- US-A1- 2004 217 616
- US-B1- 6 290 278

## Beschreibung

Die Erfindung betrifft eine Stauvorrichtung für einen Kofferraum eines Kraftfahrzeugs mit einem zwischen einer Ruheposition und einer Stauposition durch Führungsmittel beweglich gelagerten Aufnahmebehältnis, wobei die Führungsmittel und das Aufnahmebehältnis an einem Rahmenmodul angeordnet sind, das durch werkzeuglos bedienbare Befestigungsmittel lösbar an einem Wandungsabschnitt des Kofferraumes montierbar ist.

Eine derartige gattungsgemäße Stauvorrichtung ist aus der US 585310 bekannt. Die bekannte Stauvorrichtung weist ein zweischaliges Aufnahmebehältnis auf, das fahrzeugfest und lösbar an einer Seitenwand eines Kofferraumes montierbar ist. In dem zweischaligen Aufnahmebehältnis ist ein Einsatz vorgesehen, der mit Aussparungen für die Halterung entsprechender Ausstattungsteile vorgesehen ist.

Die US 5046913 offenbart einen mittels Führungsschienenanordnungen an einem Laderaumboden verschiebbar gelagerten Lastboden, der durch eine Heckklappe des Kraftfahrzeugs hindurch nach außen ausgezogen werden kann, um eine Auffahrrampe für schwere Transportgegenstände zu bilden.

Aus der US 2004/0217616 A1 ist ein Laderaum für ein Kraftfahrzeug bekannt, dessen Seitenwandungen mit verschiedenen, austauschbaren Funktionsmodulen versehen sind.

Die EP 164277 A1 betrifft einen weiteren Laderaum für ein Kraftfahrzeug, in dessen Begrenzungswandungen Rahmenvertiefungen vorgesehen sind, in denen Funktionsmodule aufgenommen werden können.

Eine weitere Stauvorrichtung ist aus der DE 101 12 272 A1 bekannt. Das dort offenbarte Aufnahmebehältnis ist als Schublade ausgeführt, die linearbeweglich in Horizontalführungen zwischen einer Ruheposition und einer Stauposition, in der ein Be- oder Entladen der Schublade ermöglicht ist, verschiebbar angeordnet ist. Entsprechende Führungsschienen für das Schubladenteil sind fahrzeugfest im Kofferraum angeordnet.

Aus der DE 44 42 942 A1 ist eine weitere Stauvorrichtung für einen Kofferraum eines Personenkraftwagens bekannt, bei der ein Aufnahmebehältnis zwischen einer unter einer Hutablage angeordneten Ruheposition und einer in Richtung der Kofferraumöffnung verlagerten Stauposition beweglich angeordnet ist. Das Aufnahmebehältnis ist wannenartig ausgeführt und mit Hilfe von Parallelogrammlenkern zwischen der Stauposition und der Ruheposition parallel verlagerbar. Wenigstens eine Gasdruckfeder unterstützt die Verlagerungsbewegung aus der Ruheposition in die Stauposition, in der entsprechendes Staugut entnommen oder verstaut werden kann.

Aufgabe der Erfindung ist es, eine Stauvorrichtung der eingangs genannten Art zu schaffen, die eine Beleuchtung ihres Aufnahmebehältnisses ermöglicht, ohne dass eine separate Beleuchtungseinrichtung für die Stauvorrichtung vorgesehen sein muss.

Diese Aufgabe wird dadurch gelöst, dass im Bereich des Wandungsabschnittes, insbesondere einer Deckwandung, eine Kofferraumleuchte vorgesehen ist, die bei in Stauposition überführtem Aufnahmebehältnis dessen Inneres beleuchtet.

In Ausgestaltung der Erfindung ist das Aufnahmebehältnis mit einem Aussparungsbereich versehen, der bei in Ruheposition befindlichem Aufnahmebehältnis derart fluchtend unterhalb der Kofferraumleuchte positioniert ist, dass das Licht der Kofferraumleuchte durch den Aussparungsbereich hindurch nach unten in den Kofferraum strahlt. Durch diese Ausgestaltung verdeckt das Aufnahmebehältnis in seiner Ruheposition die Kofferraumleuchte nicht, so dass in der Ruheposition eine ausreichende Beleuchtung des Kofferraumes in gleicher Weise ermöglicht ist wie für den Fall, bei dem die Stauvorrichtung aus dem Kofferraum entnommen ist.

In weiterer Ausgestaltung der Erfindung ist das Aufnahmebehältnis als Kunststoffwanne gestaltet, die wenigstens in ihrem Bodenbereich mit mehreren quer- und längsverlaufenden Verrippungen versehen ist. Dadurch weist die Kunststoffwanne eine hohe Steifigkeit auf und kann somit die Stabilität der Gesamtanordnung aus Rahmenmodul, Führungsmittel und Aufnahmebehältnis erhöhen.

In weiterer Ausgestaltung der Erfindung ist der Aussparungsbereich in einem in Ausziehrichtung vorderen Randbereich der Kunststoffwanne angeordnet, und der Aussparungsbereich ist als Griffbereich zum manuellen Ergreifen der Kunststoffwanne ausgeführt. Der Aussparungsbereich bildet somit eine Doppelfunktion, da er neben der Lichtführung auch eine Grifffunktion zum manuellen Ausziehen oder Einschieben des Aufnahmebehältnisses erfüllt.

Weitere Vorteile und Merkmale der Erfindung ergeben sich aus den Ansprüchen. Nachfolgend ist ein bevorzugtes Ausführungsbeispiel der Erfindung beschrieben und anhand der Zeichnungen dargestellt.
- Fig. 1: zeigt in perspektivischer Darstellung eine Ausführungsform einer erfindungsgemäßen Stauvorrichtung, wobei sich das Aufnahmebehältnis in seiner Ruheposition befindet,
- Fig. 2: die Stauvorrichtung nach Fig. 1, wobei die Anordnung der Stauvorrichtung unterhalb einer fahrzeugfesten Deckwandung des Kofferraumes erkennbar ist,
- Fig. 3: die Stauvorrichtung nach Fig. 2, wobei das Aufnahmebehältnis in seine Stauposition ausgezogen ist,
- Fig. 4: eine heckseitige Ansicht des Stauvorrichtung nach den Fig. 1 bis 3,
- Fig. 5: ein Einsatzteil für einen Aufnahmebereich in der Deckwandung, um das Einführen und Sichern eines Einhängehakens der Stauvorrichtung zu ermöglichen und
- Fig. 6: das Einsatzteil nach Fig. 5 in um 180° gedrehter Darstellung.

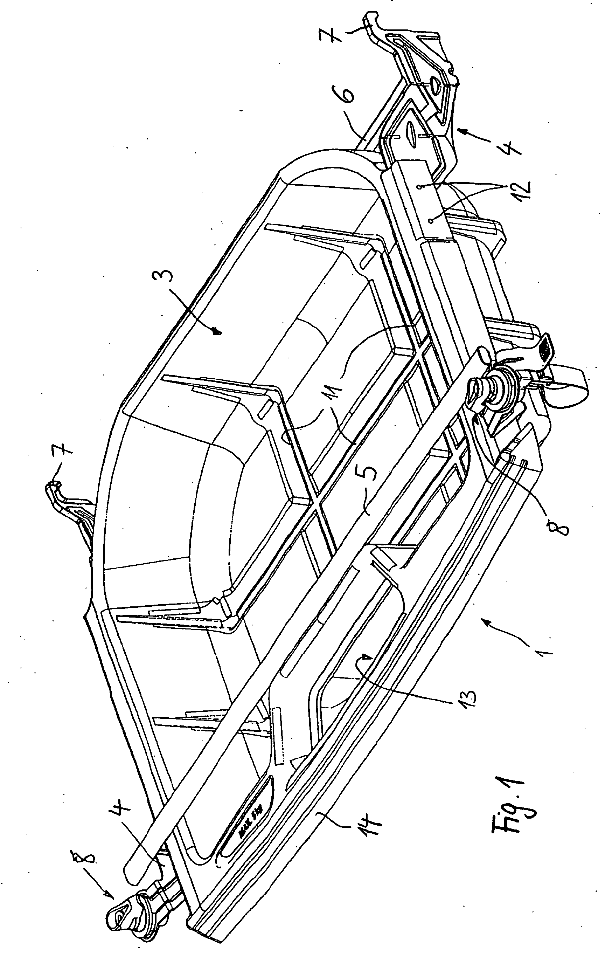

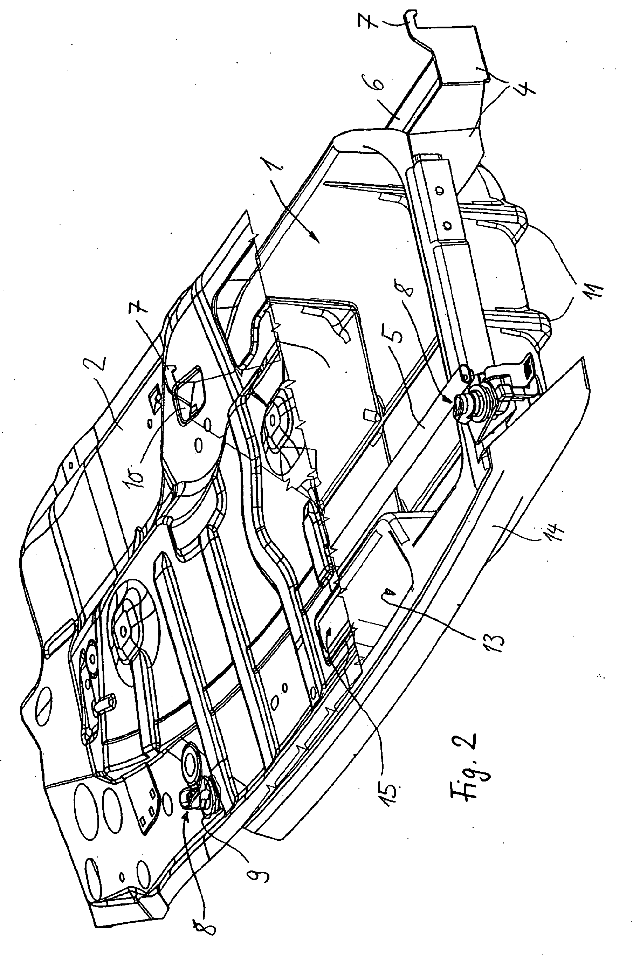

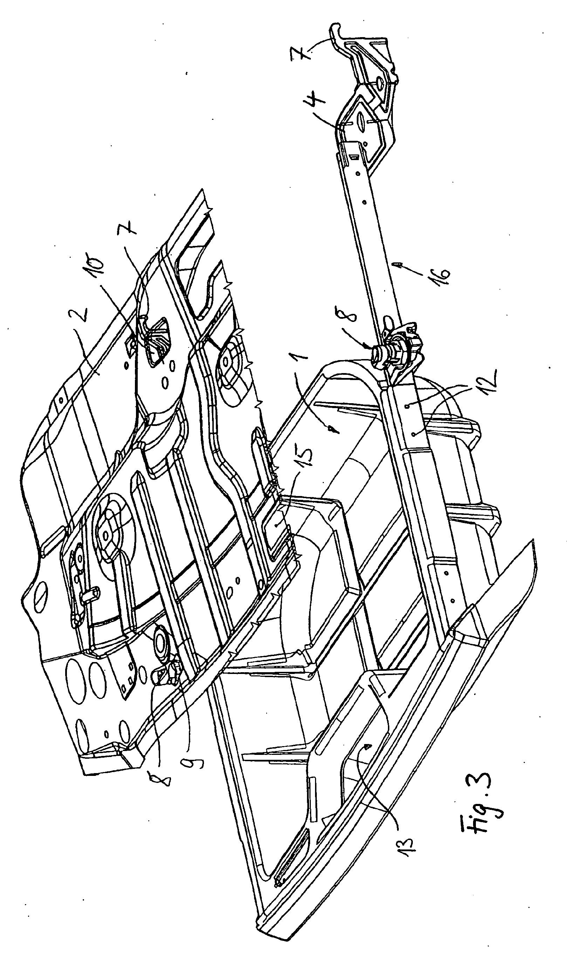

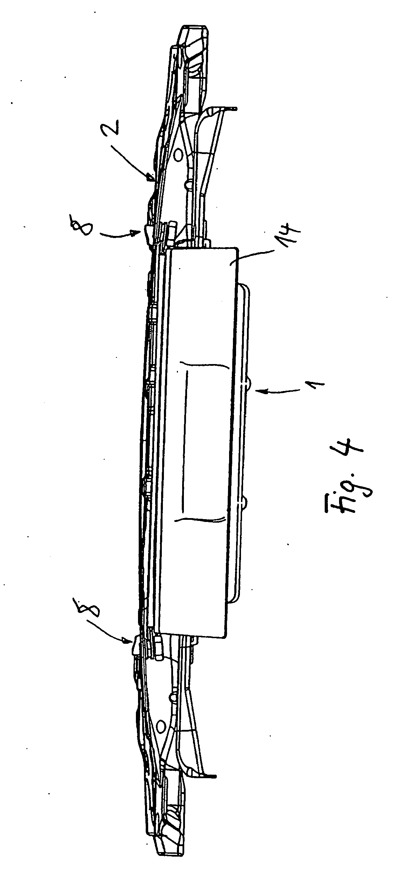

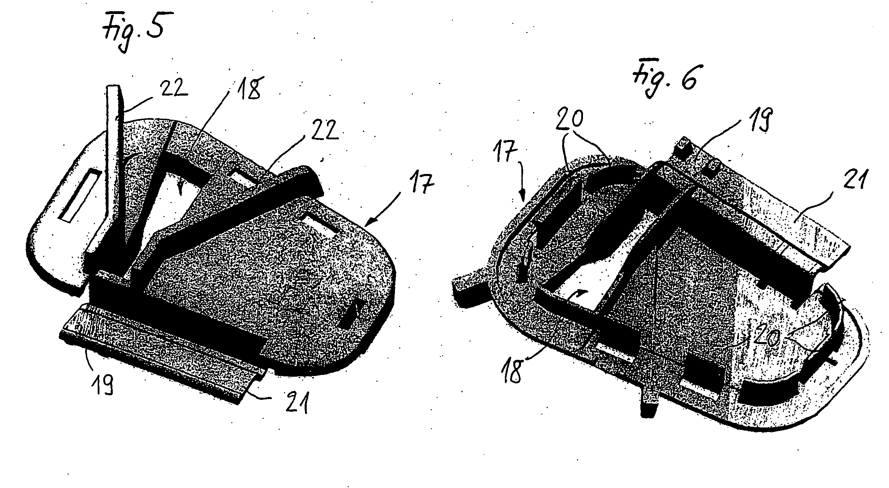

Eine Stauvorrichtung gemäß den Fig. 1 bis 6 ist für einen Kofferraum eines Personenkraftwagens vorgesehen. Der Kofferraum wird in grundsätzlich bekannter Weise nach unten durch einen Kofferraumboden und nach oben durch einen Kofferraumdeckel sowie in Fahrzeuglängsrichtung anschließend an den Kofferraumdeckel durch eine Deckwandung 2 begrenzt. Die Deckwandung 2 stellt ein Karosserierohbauteil dar, das fest in die Karosserierohbaustruktur eingebunden ist. Wie anhand der Fig. 2 und 3 erkennbar ist, ist die fahrzeugfeste Deckwandung 2 mit zwei in Fahrzeugquerrichtung zueinander beabstandeten, in normaler Fahrzeugausrichtung gesehen vorderen Aufnahmebereichen 10 sowie mit zwei hinteren Aufnahmebereichen 9 versehen, die Durchtritte in der Deckwandung 2 darstellen. Die vorderen Aufnahmebereiche sind etwa viereckig ausgeführt. Die hinteren Aufnahmebereiche 9 weisen eine etwa ovale Durchtrittsöffnung auf. In die vorderen Aufnahmebereiche ist gemäß den Fig. 5 und 6 jeweils ein Einsatzteil 17 einsetzbar, das mit einem Einführsteg 21 und mehreren Raststegen 20 versehen ist, die längs der Randkontur des entsprechenden Aufnahmebereiches 10 verlaufen und ein Einrasten des Einsatzteiles 17 in den entsprechenden Aufnahmebereich 10 ermöglichen. Das jeweilige Einsatzteil 17 wird von unten her, d.h. vom Kofferraum aus, in den entsprechenden Aufnahmebereich 10 eingeführt und durch einfaches Eindrücken in diesem eingerastet. Die beiden Einsatzteile 17 für die vorderen Aufnahmebereiche 10 dienen dazu, in nachfolgend näher beschriebener Weise das Einführen und Sichern von Einhängehaken eines Rahmenmodules 4, 5, 6 der Stauvorrichtung zu ermöglichen.

Die Stauvorrichtung 1 weist eine Kunststoffwanne 3 auf, die mit Hilfe von Befestigungsmitteln 12 an ihren gegenüberliegenden Längsseiten mittels jeweils einer Führungsschienenanordnung 16 an dem Rahmenmodul 4 bis 6 linear verschiebbar befestigt ist. Das Rahmenmodul 4 bis 6 weist zwei parallel zu den Führungsschienenanordnungen 16 verlaufende Längsträgerprofile 4 auf, die durch zwei Querträger 5, 6 zu einem viereckigen Rahmen stabil miteinander verbunden sind. Ein vorderer Querträger 6 verläuft etwa auf Höhe der vorderen Einhängehaken 7, die an den Längsträgern 4 angeformt sind und zum Einhängen in die Einsatzteile 17 der vorderen Aufnahmebereiche 10 der Deckwandung 2 dienen. Ein hinterer Querträger erstreckt sich zwischen den hinteren Endbereichen der Längsträger 4 oberhalb der Kunststoffwanne 3 und ist ebenfalls fest mit diesen verbunden. Im Bereich des hinteren Querträgers 5 sind die hinteren Befestigungsmittel 8 an dem Rahmenmodul 4 bis 6 angeordnet, die als Spannelemente in Form von Bajonettverschlussteilen ausgeführt sind. Jedes Spannelement 8 ist an seiner Unterseite mit einem Handgriff und an seiner Oberseite mit einem radial abragenden Exzenterzapfen versehen. Um das Rahmenmodul einschließlich der Führungsschienenanordnungen 16 und der daran befestigten Kunststoffwanne 3 an der Unterseite der Deckwandung 2 befestigen zu können, wird zunächst die gesamte Einheit vom Kofferraum aus derart schräg nach oben gerichtet, dass die Einhängehaken 7 in entsprechende Einführschlitze 18 der Einsatzteile 17 der vorderen Aufnahmebereiche 10 eingeführt werden können. Zentrierschrägen 22 an den Einsatzteilen 17 dienen als Einführhilfe für die Einhängehaken 7. Sobald die Einhängehaken 7 nach oben durch die Einführschlitze 18 hindurchgeführt sind, gleiten die Einhängehaken zwischen zwei Zentriernocken in jedem Einsatzteil 17 über einen Absatz 19 und übergreifen diesen Absatz am vorderen Randbereich des Einführsteges 21. Das übrige Rahmenmodul 4 bis 6 wird während des Einführvorganges im Bereich der Einhängehaken 7 in seinem hinteren Bereich nach oben verschwenkt, wodurch die Exzenterzapfen oder Exzenternocken der Spannelemente 8 in ihrer Demontagenstellung durch die ovalen hinteren Aufnahmebereiche 9 der Deckwandung 2 hindurchgeführt werden können. Durch ein einfaches Verdrehen der Betätigungsgriffe werden die Exzenternocken an jeweils einer entsprechenden Anlaufschräge im Bereich der Oberseite der Deckwandung verspannt und verriegeln somit zwangsläufig das Rahmenmodul 4 bis 6 an der Unterseite der Deckwandung 2. Eine Demontage der Stauvorrichtung und damit des Rahmenmoduls 4 bis 6 erfolgt in entsprechender umgekehrter Weise, indem zunächst die Spannelemente 8 mittels einer Drehung der Betätigungsgriffe gelöst werden, so dass die Spannelemente 8 aus den hinteren Aufnahmebereichen 9 nach unten ausgeführt werden können. Anschließend werden die Einhängehaken 7 aus den vorderen Aufnahmebereichen 10 und aus den vorderen Einsatzteilen 17 wieder herausgenommen.

Wie anhand der Fig. 1 bis 3 erkennbar ist, ist die Kunststoffwanne 3 mit ihren gegenüberliegenden seitlichen Randbereichen auf jeweils einer Führungsschienenanordnung 16 abgestützt und an entsprechend beweglichen Schienenteilen mittels der Befestigungselemente 12, die vorzugsweise als Schraubelemente ausgeführt sind, befestigt. Jede Führungsschienenanordnung 16 ist aus mehreren, teleskopförmig ausziehbaren Schienenteilen zusammengesetzt, die vorzugsweise über Wälz- oder Gleitlagerungen vorzugsweise spielfrei verschiebbar relativ zueinander gelagert sind. Die Kunststoffwanne 3 ist mit mehreren längs- und querverlaufenden Verrippungen 11 versehen, die in dem Bodenbereich der Kunststoffwanne 3 vorgesehen sind und bis in den nach oben gezogenen Wandungsbereich der Kunststoffwanne 3 geführt sind. Die Verrippungen 11 sind vorzugsweise durch entsprechende Tiefziehvorgänge einstückig in der Kunststoffwanne 3 ausgeformt.

Ein querverlaufender, heckseitiger Wandungsbereich der Kunststoffwanne 3 ist mit einer einstückig in die Kunststoffwanne 3 integrierten Abschlussblende 14 versehen, die mit einem von oben nach unten durchgängig offenen Aussparungsbereich 13 versehen ist. Der Aussparungsbereich 13 ist nach oben und nach unten offen und weist einen horizontalen freien Querschnitt auf, der wenigstens einer Grundfläche einer in der Deckwandung 2 integrierten Kofferraumleuchte 15 entspricht. In der montierten Position des Rahmenmodules 4 bis 6 und in der geschlossenen Ruheposition der Stauvorrichtung, in der die Kunststoffwanne 3 gemäß den Fig. 1 und 2 bis zu einem vorderen Endanschlag in den Kofferraum hinein nach vorne geschoben ist, fluchtet der Aussparungsbereich 13 in vertikaler Richtung mit der Kofferraumleuchte 15. Die Kofferraumleuchte 15 kann somit ihr Licht durch den Aussparungsbereich 13 hindurch in den darunterliegenden Kofferraumbereich strahlen. Bei in Ruheposition befindlicher Kunststoffwanne ist somit die Kofferraumbeleuchtung durch die Kofferraumleuchte 15 nicht beeinträchtigt. Sobald die Kunststoffwanne in ihre gemäß Fig. 3 geöffnete Stauposition nach hinten ausgezogen ist, beleuchtet die Kofferraumleuchte 15 das Innere der Kunststoffwanne 3. Ein zusätzliche Beleuchtung für die Stauvorrichtung und damit insbesondere für das Innere der Kunststoffwanne 3 ist hierdurch nicht notwendig.

Die Abschlussblende 14 ist einschließlich des Aussparungsbereichs 13 zudem so ausgeführt, dass im Bereich der Abschlussblende 14 und/oder in dem Aussparungsbereich 13 eine Griffmulde oder eine Griffaussparung gebildet ist, die das manuelle Ergreifen der Kunststoffwanne 3 für einen Auszieh- oder Einschubvorgang ermöglicht.

## Patentansprüche

1. Stauvorrichtung für einen Kofferraum eines Kraftfahrzeugs mit einem zwischen einer Ruheposition und einer Stauposition durch Führungsmittel beweglich gelagerten Aufnahmebehältnis, wobei die Führungsmittel (16) und das Aufnahmebehältnis (3) an einem Rahmenmodul (4 bis 6) angeordnet sind, das durch werkzeuglos bedienbare Befestigungsmittel (7, 8) lösbar an einem Wandungsabschnitt (2) des Kofferraumes montierbar ist, **dadurch gekennzeichnet, dass** im Bereich des Wandungsabschnittes, insbesondere einer Deckwandung (2), eine Kofferraumleuchte (15) vorgesehen ist, die bei in Stauposition überführtem Aufnahmebehältnis (3) das Innere des Aufnahmebehältnisses (3) beleuchtet, und dass das Aufnahmebehältnis (3) mit einem Aussparungsbereich (13) versehen ist, der bei in Ruheposition befindlichem Aufnahmebehältnis (3) derart fluchtend unterhalb der Kofferraumleuchte (15) positioniert ist, dass das Licht der Kofferraumleuchte (15) durch den Aussparungsbereich (13) hindurch nach unten in den Kofferraum strahlt.

2. Stauvorrichtung nach Anspruch 1, **dadurch gekennzeichnet, dass** das Aufnahmebehältnis als Kunststoffwanne (3) gestaltet ist, die wenigstens in ihrem Bodenbereich mit mehreren quer- und längsverlaufenden Verrippungen (11) versehen ist.

3. Stauvorrichtung nach einem der vorhergehenden Ansprüche, **dadurch gekennzeichnet, dass** der Aussparungsbereich (13) in einem in Ausziehrichtung vorderen Randbereich der Kunststoffwanne (3) angeordnet ist, und dass der Aussparungsbereich einen Griffbereich zum manuellen Ergreifen der Kunststoffwanne (3) umfasst.

## Claims

1. Stowage device for a luggage space of a motor vehicle having a container which is mounted movably by guide means between a rest position and a stowage position, where the guide means (16) and the container (3) are arranged on a frame module (4 to 6) that can be detachably mounted on a wall section (2) of the luggage space by fastening means (7, 8) which can be operated without tools, **characterized in that** in the region of the wall section, in particular of a top wall (2), a luggage space lamp (15) is provided which illuminates the interior of the container (3) when the latter has been moved to the stowage position and **in that** the container (3) is provided with a cut-out region (13) which, when the container (3) is in the rest position, is positioned in alignment underneath the luggage space lamp (15) such that the light of the luggage space lamp (15) shines downwards into the luggage space through the cut-out region (13).

2. Stowage device according to Claim 1, **characterized in that** the container is designed as a plastic tray (3) that is provided at least in its base region with several transversely and longitudinally running ribs (11).

3. Stowage device according to one of the preceding claims, **characterized in that** the cut-out region (13) is arranged inside an edge region of the plastic tray (3) that is at the front in the pulling-out direction, and **in that** the cut-out region comprises a handle region for manually gripping the plastic tray (3).

## Revendications

1. Dispositif de rangement pour un coffre à bagages d'un véhicule automobile, avec un récipient logé de manière mobile entre une position de repos et une position de rangement par des moyens de guidage, sachant que les moyens de guidage (16) et le récipient (3) sont disposés sur un module de cadre (4 à 6) qui peut être monté de manière amovible sur une section de paroi (2) du coffre au moyen d'éléments de fixation (7, 8) pouvant être actionnés sans outil, **caractérisé en ce qu'**est prévue dans la zone de la section de paroi, en particulier d'une paroi de plafond (2), une lampe de coffre (15) qui éclaire l'intérieur du récipient (3) lorsque le récipient (3) est amené en position de rangement, et que le récipient (3) est muni d'une zone évidée (13) qui, lorsque le récipient (3) se trouve en position de repos, est positionnée de manière alignée sous la lampe de coffre (15) de telle sorte que la lumière descendant de la lampe de coffre (15) traverse la zone évidée (13) et éclaire le coffre à bagages.

2. Dispositif de rangement selon la revendication 1, **caractérisé en ce que** le récipient est conçu comme cuve en plastique (3) qui est munie, au moins sur son fond, de plusieurs nervures (11) transversales et longitudinales.

3. Dispositif de rangement selon l'une des revendications précédentes, **caractérisé en ce que** la zone évidée (13) est placée dans une zone du bord avant de la cuve en plastique (3) dans le sens de déploiement, et que la zone évidée comprend une zone de préhension permettant de saisir manuellement la cuve en plastique (3).
